# EUROPEAN PATENT APPLICATION

(11) **EP 3 209 041 A1**
(43) Date of publication of application: **23.08.2017**
(21) Application number: 15773058.1
(22) Date of filing: 02.04.2015
(51) Int. Cl.: H04W 4/12

(54) **METHOD, DEVICE AND SYSTEM FOR SENDING MERCHANT POPULARIZATION INFORMATION TO MOBILE TERMINAL**

(30) Priority: 02.04.2014 CN 201410131389
(71) Applicant: Shanghai Chule (CooTek) Information Technology Co., Ltd, Shanghai 200030 (CN)
(72) Inventor: ZHANG, Kan, Shanghai 200030 (CN); REN, Teng, Shanghai 200030 (CN); LIU, Hongjun, Shanghai 200030 (CN); GU, Erying, Shanghai 200030 (CN); ZHANG, Meng, Shanghai 200030 (CN)
(74) Representative: Guella, Paolo
(86) International application number: PCT/CN2015/075812
(87) International publication number: WO 2015/149713

(57) **Abstract**

Among a method, apparatus and system for transmitting business promotion information to a mobile Terminal, the method includes: obtaining communication information and communication reference information from the mobile terminal, the communication information being associated with at least one of business objects in a database; extracting data of a category associated with the communication information from the business objects in the database, comparing the extracted data with the communication information, and obtaining the at least one of the business objects associated with the communication information according to a result of the comparison; determining at least one screening category based on the communication reference information, extracting data of the at least one screening category from business promotion information of the associated at least one of the business objects, comparing the extracted data of the at least one screening category with the communication reference information, and selecting or sorting pieces of the business promotion information according to a result of the comparison; and feeding the selected or sorted pieces of the business promotion information back to the mobile terminal. The present invention makes full use of the communication information and enables increased advertising accuracy of the business promotion information. In addition, the invention may achieve a greatly increased efficiency of user search and downloads.

## Description

### TECHNICAL FIELD

The present disclosure relates to the field of information delivery and, in particular, to a method, apparatus and system for transmitting business promotion information to a mobile terminal.

### BACKGROUND

Today, with the development of mobile Internet technology, more and more physical business entities, such as Starbucks and Pizza Hut, are providing dedicated end-use applications, with which users may obtain basic information of the entities, for example, phone numbers and addresses, or information of their promotional activities, for example, recently launched groupon or discount campaigns. However, as these applications are unique by individual entities, in order to meet their needs in everyday life, users often need to install, on their mobile terminal devices, more than ten, or even tens of, such applications, which not only takes up much memory space of their devices, but also creates inconvenience for them to find a desired one of the applications.

In light of this, some third-party entities have put forward applications for handling information of multiple business entities, for example, Dianping and Meituan applications. These applications collects as many business entities, and as much their information, as possible, and allow a user to search an intended one of the entities by the name. However, with such applications, the business entities are not allowed to conduct direct communications with users. As a result, on the one hand, the entities have to blindly send their campaigning information unidirectionally, which leads to increased occupation of public network resources but a low advertising efficiency. On the other hand, the search results are usually such that the users still need to verify each of them. It always happens that, the result campaigning information of a certain business entity, is not applicable to all of its branches, for example, McDonald's most discounts do not apply to its airport stores; or is only effective in a certain time period rather than any time, for example, Cash Box KTV's midnight discount price is only available in the period from 0 o'clock to early morning. Thus, it makes the search more complex and less efficient. In addition, these applications fail to satisfy the users' needs for various personalized search approaches.

Therefore, there is a need for a system and method that may meet the aforementioned user needs and allow business entities to deliver their information in an efficient way.

### SUMMARY

It is therefore one of the objects of the present application to overcome the drawbacks present in the prior art solutions as set forth above by presenting a method for transmitting business promotion information to a mobile terminal, which may effectively increase accuracy of e-information delivery and minimize the occupation of public network resources.

According to one aspect of the present disclosure, it provides a method for transmitting business promotion information to a mobile terminal, including: obtaining communication information and communication reference information from the mobile terminal, the communication information being associated with at least one of business objects in a database; extracting data of a category associated with the communication information from the business objects in the database, comparing the extracted data with the communication information, and obtaining the at least one of the business objects associated with the communication information according to a result of the comparison; determining at least one screening category based on the communication reference information, extracting data of the at least one screening category from business promotion information of the associated at least one of the business objects, comparing the extracted data of the at least one screening category with the communication reference information, and selecting or sorting pieces of the business promotion information according to a result of the comparison; and feeding the selected or sorted pieces of the business promotion information back to the mobile terminal.

According to a further aspect of the present disclosure, it provides another method for transmitting business promotion information to a mobile terminal, including: obtaining communication information and an attribute thereof from the mobile terminal, the communication information being associated with at least one of business objects in a database; extracting data of a category associated with the communication information from the business objects in the database, comparing the extracted data with the communication information, and obtaining the at least one of the business objects associated with the communication information according to a result of the comparison; selecting or sorting pieces of business promotion information of the associated at least one of the business objects based on a predetermined criterion; and matching a feeding mode to the attribute of the communication information and feeding the selected or sorted pieces of the business promotion information back to the mobile terminal in the feeding mode.

According to a further aspect of the present disclosure, it provides a system for transmitting business promotion information to a mobile terminal, including: a mobile terminal, adapted to provide communication information and communication reference information; a database, adapted to store business objects, each including at least a telephone number of a corresponding business entity and business promotion information; and a business promotion information apparatus, adapted to obtain the communication information and the communication reference information from the mobile terminal, locate associated at least one of the business objects in the database based on the communication information, compare the communication reference information with business promotion information of the associated at least one of the business objects, select or sort pieces of the business promotion information according to a result of the comparison, and feed the selected or sorted pieces of the business promotion information back to the mobile terminal.

According to a further aspect of the present disclosure, it provides a business promotion information apparatus, including: a recording module, adapted to record communication information and communication reference information obtained from a mobile terminal, the communication information being associated with at least one of business objects in a database; a search module, adapted to extract data of a category associated with the communication information from the business objects in the database, compare the extracted data with the communication information, and obtain the at least one of the business objects associated with the communication information according to a result of the comparison; a screening module, adapted to extract data of at least one screening category from business promotion information of the associated at least one of the business objects, compare the extracted data of the at least one screening category with the communication reference information, and select or sort pieces of the business promotion information according to a result of the comparison; and a feeding module, adapted to feed the selected or sorted pieces of the business promotion information back to the mobile terminal.

Compared to the prior arts, the present disclosure may take the full advantage of a telephone number of a business entity that is being or was dialed or answered by the user to deliver business promotion information associated with the telephone number with high pertinence, thus achieving increased advertising accuracy of the business promotion information. From the view of the user, a great improvement in search and download efficiency is achievable without an increase in operational complexity.

Further, the present disclosure fully takes into account various scenarios of the user conducting a conversation on the mobile terminal, by providing different modes each for feeding the business promotion information back in a manner and number compatible with a corresponding one of the scenarios. This allows the user obtain the business promotion information in a timely way while producing no impedance on his/her daily use. As such, the user may obtain related information while communicating with a business entity.

### BRIEF DESCRIPTION OF THE DRAWINGS

Other features, objects and advantages of the invention will become apparent upon reading the following detailed description of non-limiting embodiments, taken in conjunction with the accompany drawings, wherein:
FIG. 1 is a schematic block diagram illustrating an embodiment of a system for transmitting business promotion information to a mobile terminal according to the present disclosure;
FIG. 2 is a schematic illustrating the structure of an embodiment of a database in a system for transmitting business promotion information to a mobile terminal according to the present disclosure;
FIGS. 3 to 5 are schematics illustrating interfaces of different embodiments of feeding business promotion information back to a mobile terminal in a method of transmitting the business promotion information to the mobile terminal according to the present disclosure;
FIG. 6 is a flowchart graphically illustrating an embodiment of a method of transmitting business promotion information to a mobile terminal according to the present disclosure;
FIG. 7 schematically illustrates the structure of an embodiment of a business promotion information apparatus according to the present disclosure;
FIG. 8 is a flowchart graphically illustrating a process of dialing a telephone number contained in business promotion information of a business entity in an embodiment of a method of transmitting business promotion information to a mobile terminal according to the present disclosure;
FIGS. 9-11 are schematics illustrating interfaces of different embodiments of obtaining business promotion information by a business promotion information apparatus according to the present disclosure;
FIG. 12 is a flowchart graphically illustrating another embodiment of a method of transmitting business promotion information to a mobile terminal according to the present disclosure;
FIG. 13 is a flowchart graphically illustrating another embodiment of a method of transmitting business promotion information to a mobile terminal according to the present disclosure;

### DETAILED DESCRIPTION

Particular embodiments of transmitting business promotion information to a mobile terminal according to the present disclosure will be described below with reference to the annexed figures. As used herein, the "business promotion information" is intended to include, but not limited to, a profile, news, e-coupons, advertising, surveys, buying guide links, etc. of a business entity.

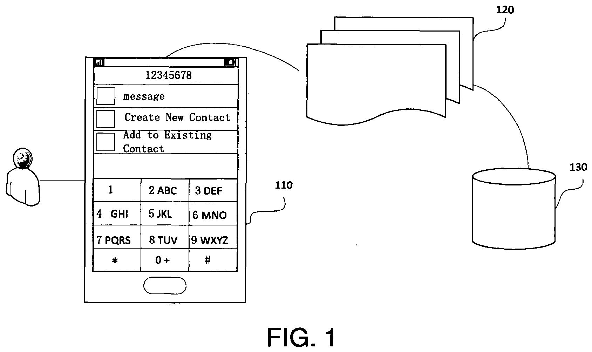

FIG. 1 schematically illustrates a scenario in which a method, according to some aspect of the present disclosure, is used to transmit business promotion information to a mobile terminal 110. Specifically, during a communication operation performed by a user on mobile terminal 110, a telephone number may be transmitted as communication information to a business promotion information apparatus 120. Processing device 120 may then search a database 130 with the communication information to obtain business promotion information associated therewith. Processing device 120 may then further filter and sort the obtained business promotion information based on communication reference information, match a feeding mode to an attribute of the communication information, and provide the processed business promotion information to the user in the feeding mode via mobile terminal 110. In one embodiment, processing device 120 and database 130 are both located on a server. In an alternative embodiment, processing device 120 is located on mobile terminal 110, while database 130 is located on the server. In another alternative embodiment, Processing device 120 and/or database 130 include a part on mobile terminal 110 and another part on database 130. In those embodiments, those on mobile terminal 110 and those on database 130 communicate with each other by at least one of WiFi, CDMA, TDMA, WiMAX, LTE and NoLA, or by other network technology.

More specifically, processing device 120 may detect a parameter of a conversation process conducted on mobile terminal 110 and obtain the communication information. For example, when the user is inputting a telephone number of Haoledi KTV (a KTV entertainment site), for example, "12345678", or is having a conversation with the number, processing device 120 may detect a parameter of the conversation process and thus obtain the communicating number. For instance, in Android systems, processing device 120 may detect the interface functions TelephonyManager/PhoneStateListener and obtain the number being dialed 12345678, The communication information may be a telephone number of a business entity, that is being input, dialed or answered by the user, recorded in a contact list on the mobile terminal, or present on an interface of the mobile terminal showing details of the business entity. In an alternative embodiment, processing device 120 may further detect a user input, obtain a letter/ number string according to the input sequence and take the letter/ number string as a communication information.

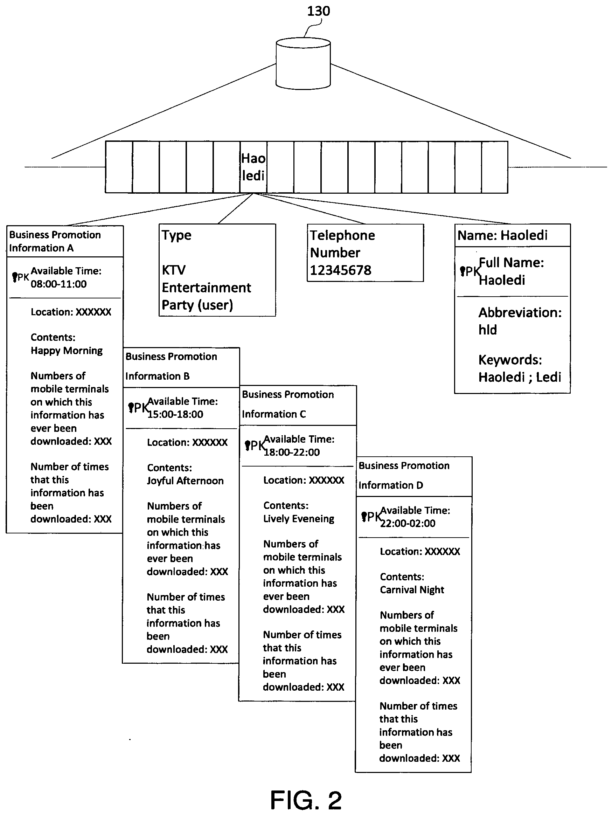

Such communication information is associated with at least one business object in database 130. For example, the number "12345678" is associated with Haoledi KTV, a business object recorded in database 130. Referring to FIG. 2, there are a great number of business objects in database 130 and each of them has data of at least one of the following categories: name, telephone number, business promotion information and type. Further, each category may have sub-categories. For example, the category "name" may have at least one of the following sub-categories: full name, abbreviation, keywords and etc.; the category "telephone" may have one or more following sub-categories: an operator number, numbers for different branches, a pre-sale service number, an after-sale number; and the category "business promotion information" may have one or more of the following sub-categories: address, time, description, numbers of mobiles terminals on which the information has been downloaded or used, the number of times that the information has been downloaded and other related items.

Wherein, the business promotion information may include static interface links or service object, such as news, electronic coupons, advertisements and shopping guides links of the merchant, and also may include service objects such as questionnaire, an entry to the service and service information menu of the merchant. In some embodiments, the service object may response to the user's operations; for example, the object may be triggered by receiving a clicking operation on the object or on other preset operation keys. The object may further include a web link or a function call or one function module entry. When obtaining the user's operations, a triggered operation, such as visiting a corresponding web link, calling a corresponding function, invoking a corresponding function or performing a corresponding function module, i.e. making calls, popping up an interactive page or a dialog box. The object may be obtained via the network real-time, stored on a server terminal or a local mobile terminal via JSON, XML data formats, or downloaded to the local mobile terminal from the network.

One business object may be associated with multiple business promotion information. The business promotion information may be obtained actively by the business promotion information apparatus 120, or provided by the merchant itself, or provided by a third-party data engine. All obtained business promotion information may be stored in the database 130, and may also be downloaded to the local mobile terminal. Further, the merchant may edit and manage provided business promotion information to ensure the business promotion information accurate and timely. In some embodiments, when there is no business objects associated with the communication information, the user may be prompted to edit the communication information. According to the user's edition of the communication information, a business object associated with the communication information can be established in the database 130, or the existing business object in the database may be revised to be associated with the communication information.

Subsequently, Processing device 120 extracts data of the same or a similar category as that of the communication information and compares the extracted data with the communication information to determine the associated business object(s). For example, with the obtained telephone number of Haoledi KTV, i.e.,"12345678", processing device 120 may extract telephone numbers, i.e., data of the category "telephone", of all the business objects in the database and compare each of the telephone numbers with the obtained number of Haoledi KTV, thereby determining the business object that is associated with the obtained telephone number. For example, when the business object "Haoledi KTV" contains a data of the telephone category, same with the number string or containing the telephone number, Haoledi KTV is determined as the associated business object for the obtained telephone number.

In an alternative embodiment, other business objects, such as Melody and Case BoxKTV, of the same type as Haoledi KTV may also be determined as being associated with the obtained telephone number. Herein, considering the fact that it may be the case that what the user wants to find is just a KTV place which is not necessarily Haoledi KTV, compared to only providing the user with business promotion information that exactly corresponds to the obtained telephone number, according to some aspects of the present disclosure, it may provide the user with a larger number of more flexible options while not requiring the user to memorize a great number of telephone numbers or store them on a memory. This leads to a reduction in operational complexity, saving of memory space and enhancement in user experience. The type of a business object may be set by the system or by the user according to personal needs.

Wherein, categories of the business object can be set by the system, and also can be set according to the user's own needs. Specifically speaking, the classification category of the business object can further include at least one sub-category data: a default category and a user category. In some embodiments, each category of the business object may be identified separately with corresponding codes, such as digital coding or alphabetic coding, for editing and revising. Wherein, the default category may be set by the system. For example, the default category can include at least one sub-category data: business scope (such as catering A0001, bar A0010, KTVA0011, bank B0001, securities B0010, express C0010, 4S stores D0001, hotel E0001, trip E0010, flight E0011, Driving service E0100, recharging F0001, registering G0001, movie H0001, etc.), business contents (such as Sichuan cuisine aa001, Cantonese cuisine aa010, European cuisine aa011, desserts aa100, second-hand cars da 001, etc.). The user can edit the user category, add, revise or delete the sub-category of the user category. In some embodiments, the user category may further comprise a sub-category: business hours uft (i.e. office hour uft01, show time uft02 and etc.), business location uft1, party uf-party, teatime uf-tea and so on. In some embodiments, processing device 120 may record and analysis the situation that the user actually uses the business object in different categories, and thus further increase, delete or modify the corresponding data in the categories. In some embodiments, processing device 120 further determines whether two or more business objects belong to be a same category by calculating the classification codes.

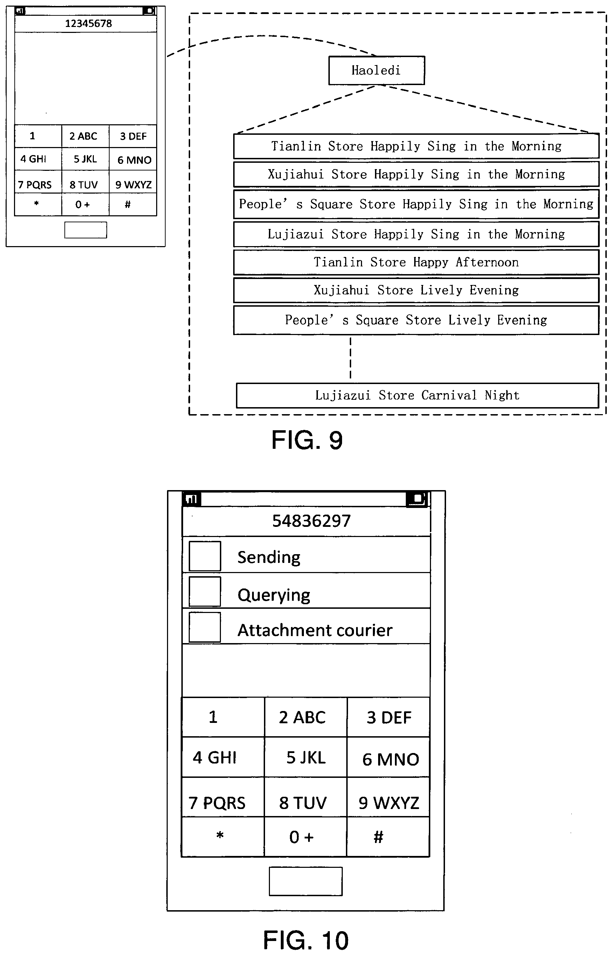

Processing device 120may subsequently obtain associated business promotion information, based on the business object(s) in database 130 associated with the telephone number "12345678". For example, referring to Figure 9, processing device 120 may determine the associated business object(s), for example, Haoledi KTV, based on the communication information and then further obtain business promotion information associated with the business object(s), for example, information of discount campaigns available at different time frames provided by various Haoledi KTV stores. For another example, referring to Figure 10, the business promotion information apparatus 120 may confirm the associated business object like YTO express according to the communication information, and further obtain its associated business promotion information, such as the service entry "Sending", "Querying", "Nearby Courier" of the service information menu.

Because one business object usually corresponds to multiple business promotion information, and these information will be published in large quantities at irregular intervals. If all business promotion information associated to the business object is sent to the user, it will not only increase the data size of the transmission information, but also most of the data are useless to the user.

Based on the communication reference information obtained from the mobile terminal, for example, a time when the current conversation occurs, a location where the conversation occurs, download history of the mobile terminal, or other communication-related reference information. The processing device 120 may further screen and filter the obtained business promotion information of the associated business object(s), for example, the information of discount campaigns of the Haoledi KTV stores.

Particularly, the screening and filtering may be accomplished by extracting data of the same or a similar screening category as that of the communication reference information from the business promotion information and comparing each datum of the extracted data with the business promotion information. Still taking Haoledi KTV as an example, data of the same or similar categories, for example, an applicable time frame, location or store name, of business promotion information (i.e. discount campaign information of the Haoledi KTV stores) may be extracted, Haoledi KTV and be compared with a corresponding value indicated by the communication reference information, so that processing device 120 may select a piece of the information indicative of a time frame that is closest to the time of the current conversation, or a piece of the information indicative of a location that is closest to the location where the current conversation occurs, or piece(s) of the information indicative of store(s) whose previous discount campaign information was ever downloaded to the mobile terminal, or sorting the pieces of discount campaign information of the Haoledi KTV stores. In some embodiments, a weight value of the business promotion information may be obtained according to the comparison of the extracted data and the communication reference information, and such weight value may be used for screening and filtering.

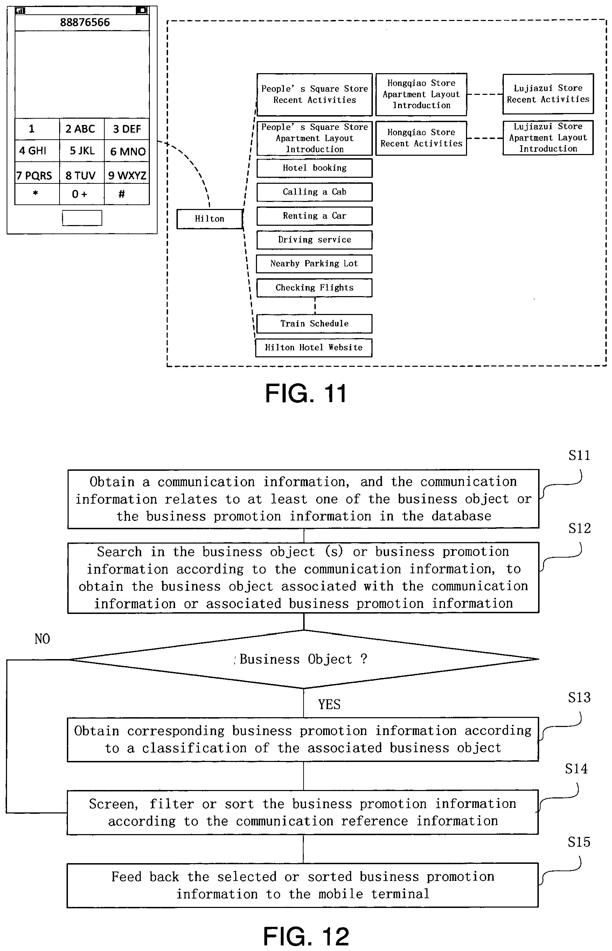

In some embodiments, the business promotion information apparatus 120 also obtains associated business promotion information, combining the category of the business object. For example, referring to Figure 10, when the use inputs a telephone number of some express company, the processing device 120 obtains associated business object according to the telephone number, and then according to the category of the associated business object, that is "Express", obtains associated business promotion information including service entry "tracking" and "sending", wherein, the associated sub-category of the processing device 120 may comprise "Express". Next, the processing device 120 may further obtain, according to the location of the current conversation, the service information menu "nearby courier" nearby. For another example, referring to Figure 11, when the user dials to Hilton hotel, the processing device 120 searches, before the call gets through, for the associate business object "Hilton" according to the character string the user inputs. Subsequently, the processing device 120 may obtain associated business promotion information according to the name of this associated business object, wherein, these associated promotion information contain a data of associated sub-category including the letter string "Hilton", or a data of associated sub-category including the number string that the user dials, or a data of associated sub-category including categories for the business object "Hilton", "Hotel", "Trip", "Travel", etc.; for example, activities information for each store and its apartment layout introduction. Furthermore, the processing device 120 may obtain associated business promotion information according to the associated business object category or telephone number, wherein, these associated promotion information include, such as the website link of Hilton Hotel, service entry "Booking", service entry "Calling a cab", service entry "Renting a car", service entry "Driving service", service entry "Checking flight", service information menu "Nearby parking lot" and service information menu "Train schedule", etc. Subsequently, the processing device 120 filters these promotion information according to the current communication time, the current communication address, download history and/or use history, and displays the filtered results on the current input interface in a list. Combining the category of the business object, the service objects associated with the business object is provided to the user, which enables that the user can complete operations associated with the business object, directly via the service item like the service entry before the user dials the telephone number, so as to reduce calling frequencies, decrease communication costs and increase efficiency.

In some embodiments, the processing device 120may combine with data of other categories of the associated business object, to obtain associated business promotion information. For example, when obtaining the communication information, the processing device 120 may match it with the telephone number of the business object, to obtain the associated business object and obtain corresponding business promotion information of these associated business objects; subsequently, search according to the telephone number of the business object, and obtain associated business promotion information, among which, these associated sub-category data may include the telephone number of the business object.

In some embodiments, the business promotion information apparatus 120 can also directly search associated business promotion information according to obtained communication information, of which, these associated sub-category data can include obtained communication information.

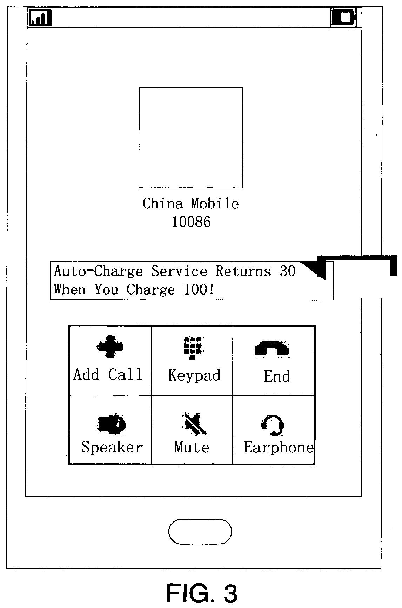

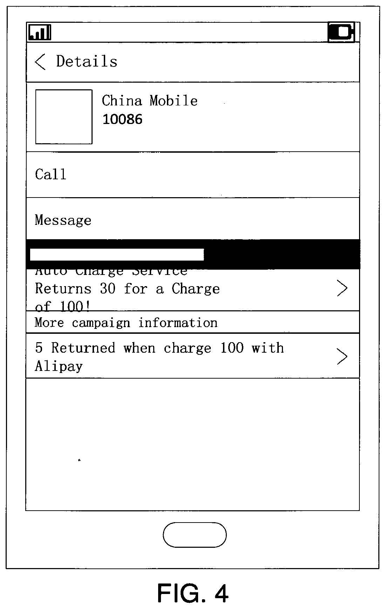

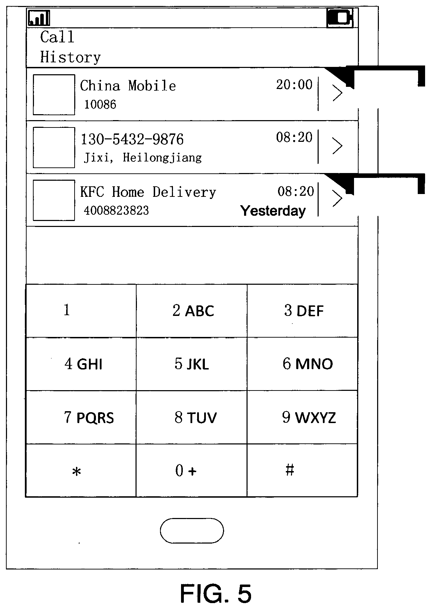

Afterward, Processing device 120 may detect an attribute of the communication information, for example, a piece of information indicative of whether the communication information, for example, the aforementioned telephone number, was obtained from an ongoing conversation process, detailed information of a contact, or a call log, and match the detected attribute which may be alternatively recorded when the communication information was obtained, to a feeding mode. Specifically, the business promotion information may be fed back as a visual or auditory item, for example, a popup box shown on an interface of the current call, as shown in FIG. 3, or a menu or list displayed below a corresponding item in the call log list or displayed on a contact information interface, as shown in FIG. 4, or a corner mark or other notification mark that is located beside a corresponding item in the call log list and causes details of the business promotion information to be displayed upon the corresponding item being selected, as shown in FIG. 5, or an item displayed on the current dialing interface, when the user inputs a number but hasn't dialed yet, or when the dial button is activated, as shown in FIG. 10. In addition, the information may also be displayed on a hang-up interface at the end of the call process (not shown in the attached figure). When an item with a notification mark is selected, detailed business promotion information may be further displayed or a service interface may be connected via the corresponding service entry. Additionally, the business promotion information may also be fed back in the form of a text-to-speech, notification sound or other multimedia item.

In another embodiment of the business promoting information apparatus of this disclosure, the corresponding business promotion information can be provided by a third party. For example, in Figure 12, the service entry "Hotel booking" can be provided by the C-trip ordering platform. When it is selected, the service entry will be connected to the booking interface of the C-trip ordering platform.

In some embodiments, the business promotion information apparatus 120 may further display the associated business object at the same time. The business object obtains a click or other operation of a user, and turns to dial the telephone number of the business object or open the website of the business object or enter a human-machine interactive interface designated by the business object according to the user's actions. In some embodiments, said business objects are collectively displayed. For example, all business objects are displayed prior to the business promotion information, or the above business objects can be displayed correspondingly with associated business promotion information.

In some embodiments, further, when there is a certain contact person matched with the user's input, the business promotion information apparatus 120 may synchronously display the matched contact person. Wherein, contact persons may be displayed prior to business objects or business promotion information.

In some embodiments, when the business object or a contact person or the above both are displayed with the business promotion information, the business promotion information apparatus 120 may display them in a certain display manner. For example, each is displayed with a split line therebetween, or with different characters, or colors or formats.

Combining with specific embodiments of the business promotion information apparatus of this disclosure, the exemplary illustration regarding how to deliver the business promotion information to the mobile terminal is given as below.

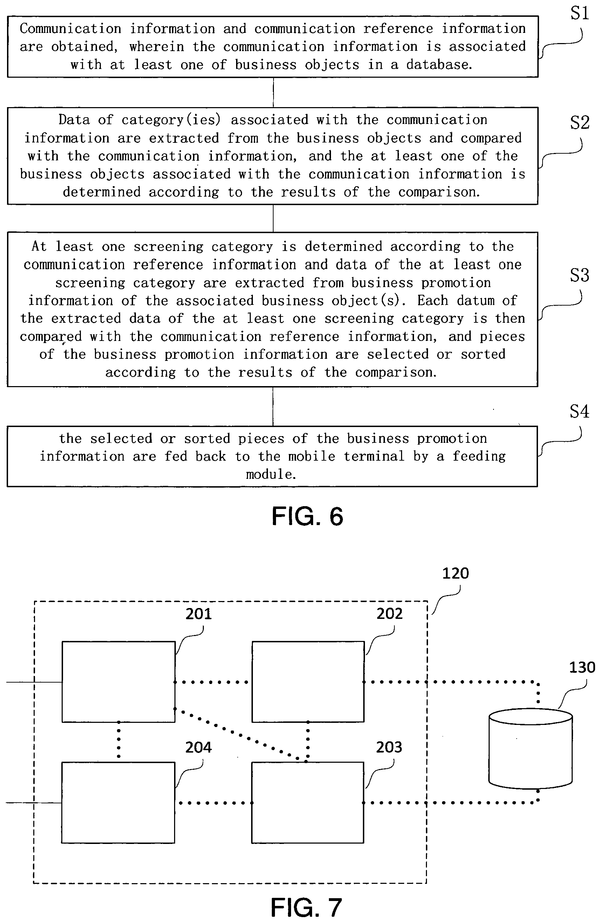

Described below is an exemplary process of transmitting business promotion information to a mobile terminal with reference to a specific embodiment of the business promotion information apparatus according to the present disclosure. FIG. 6 is a flowchart diagrammatically showing how to transmit the business promotion information to the mobile terminal according to the present disclosure. FIG. 7 is a schematic illustration of the structure of an embodiment of the business promotion information apparatus according to the invention.

In Step S1, communication information and communication reference information are obtained, wherein the communication information is associated with at least one of business objects in a database.

Specifically, a recording module 201 may detect a parameter related to a conversation process conducted on the mobile terminal. For example, when the user is inputting a telephone number or viewing detailed information thereabout, recording module 201 may detect an interface being operated or viewed by the user and the operation of the user, to obtain the telephone number of a business entity currently of interest. Alternatively, when the user is answering or dialing a telephone number of a business entity, recording module 201 may obtain the telephone number by receiving a parameter related to the conversation process. Alternatively, when the user is searching a business entity with the name on a number search interface, recording module 201 may record the name input by the user. Still alternatively, recording module 201 may detect and record the character string currently input by the user, and parse it into corresponding number or letter.

Wherein, the communication information refers to the phone number or character string concerning the telecommunication operation. In some embodiments, the communication information is a phone number, for instance, a complete or part of the number currently input by the user, or one or more numbers in the call log, or a contact number currently viewing. Obtaining communication information in Step S1 may be activated by a user operation, or conducted by the processing device 120 initiatively. In detail, recording module 201 may automatically obtain the communication information and corresponding communication reference information from the call log. Furthermore, recording module 201 may, according to a system setting or user setting, update obtained communication information referring to the latest call log in a preset time period, so as to update the business promotion information.

Additionally, Step S1 further includes obtaining communication reference information. In some embodiments, recording module 201 may also record the communication reference information that is related to the attainment of the communication information. The communication reference information may include a time when the communication information is obtained, a location of the mobile terminal at the time when the communication information is obtained, a number of the mobile terminal, and so forth. In some embodiments, communication reference information may be obtained synchronously with the obtaining of communication information, as an example, recording the time and the location when and where the communication information is obtained, at the time when the communication information is obtained. Alternatively, communication information and communication reference information may be obtained asynchronously. For instance, firstly obtain communication information, and continue the further operation; when there is a need to communication reference information, such as a number of the terminal, obtain the corresponding communication reference information.

In Step S2, data of category(ies) associated with the communication information are extracted from the business objects and compared with the communication information, and the at least one of the business objects associated with the communication information is determined according to the results of the comparison.

Specifically, each business object may have data of at least one of the following categories: name, telephone number, business promotion information and type. Further, each of the categories may have sub-categories. Wherein, business promotion information may include, such as news of the business object, coupons, advertisements, links of a shopping guide and other static links, and may also include, such as a questionnaire, a service entry, a menu of service information and other service items. A business object may be related to more than one business promotion information. The business promotion information may be gained and arranged by the apparatus 120. For instance, business promotion information apparatus 120 may obtain the news or ads of the business object, or set a service entry to the business object and manage the business promotion information. Alternatively, the business object may release and manage the business promotion information, for instance, the business object may release, increase, delete or modify a coupon, a questionnaire, a service entry and so forth. Alternatively, the business promotion information may be provided by a third party. For instance, when a user is dialing to a hotel, a service entry to booking or others service, connecting to a booking interface of a booking platform, such as C-trip, may be provided to the user; for another instance, when a user is inputting a number of a cinema, an entry for providing a price-compare service or other related services, or a ticket interface of a booking platform such as "www.gewara.com", is then fed back to the user.

A search module 202 may extract the data of the associated category(ies) according to the communication information recorded by recording module 201. For example, when the communication information is indicative of a telephone number, search module 202 may extract data of the category "telephone number" from all the business objects in the database. Similarly, when the communication information is indicative of a name of a business entity, search module 202 may extract, from the database, data of the category "name" of all the business objects. Similarly, when the input string recorded by recording module 201 is parsed to a number string, search module 202 may search not only in the category "telephone number" of all the business objects, but also in the category "name" of all the business objects, according to the input string.

With the data of the associated category(ies) being obtained, search module 202 compares each datum of the data with the communication information. When a datum is equal to the communication information, a business object corresponding to the datum is determined as being associated with the communication information. Alternatively, when a datum is the same as the communication information, business objects of the same type as the business object corresponding to the datum are all determined as being associated with the communication information.

The type of the business objects may be a default type. For example, "Spice Spirit Restaurant" and "Yuxin Sichuan Dish Restaurant" are both Sichuan food restaurants and may be therefore set as being of the same type as default. As such, in case of the user dialing a number of "Spice Spirit Restaurant" for reserving a table, just in time when there is available a discount campaign of "Yuxin Sichuan Dish Restaurant". The business promotion information of "Yuxin Sichuan Dish Restaurant" which is also recognized as an associated business object may also be delivered to the user.

The user may be allowed to voluntarily add, revise or delete information of data of the category "type". For example, if the user is going to buy a car, he/she may label the type of all telephone numbers of related car shops as "A". In this case, if the user has contacted a BMW 4S shop via the corresponding telephone number and know that there is currently no discount available there, and at the same time there happens to be a Mercedes-Benz 4S shop providing a discount, even though the user has not ever dialed the telephone number of the Mercedes-Benz 4S shop, the business promotion information regarding the discount of the Mercedes-Benz 4S shop may be still delivered to a mobile phone of the user so as to provide the user with an additional choice.

In another embodiment of Step S2, search module 202 may search in each category of the business objects according to the communication information. For instance, search module 202 may compare each datum of each category with the communication information and obtain a corresponding compared result.

In Step S3, at least one screening category is determined according to the communication reference information and data of the at least one screening category are extracted from business promotion information of the associated business object(s). Each datum of the extracted data of the at least one screening category is then compared with the communication reference information, and pieces of the business promotion information are selected or sorted according to the results of the comparison.

Specifically, a screening module 203 may select a screening category according to the communication reference information recorded by recording module 201 and extract data of a screening category from business promotion information of the associated business object(s). Recording module 201 may then compare each datum of the extracted data of the at least one screening category with the communication reference information, to determine whether to select pieces of the business promotion information or sort the pieces of the business promotion information. The communication reference information may be indicative of the time or location of the current communication, or the number of the currently used mobile terminal. The screening category may be either a screening category identical to that of the communication reference information or more screening categories including one or more other categories in addition to that of the communication reference information.

For example, if the user of the mobile terminal is detected to be dialing"4008-111-111", recording module 201 may record the telephone number and detect out that a place where the dialing is made is in the city of "Harbin". According to the data by recording module 201, search module 202 may perform a search to find out that a business object corresponding to this number is "S.F. Express". Screening module 203 may then search for business promotion information of "S.F. Express" available for "Harbin" and select a business promotion information "Package Delivery Speed-up for Harbin-Related Routes".

As another example, when the user dials the telephone number of Haoledi KTV, for example, "12345678", at 15:00 p.m., recording module 201 may record the telephone number as well as the time when the number is dialed. Search module 202 may then perform a search to determine Haoledi KTV as a business object associated with the number. Afterward, screening module 203 may select or sort pieces of business promotion information of Haoledi KTV according to communication reference information. Herein, the communication reference information may be the time of the current communication, i.e., 15:00 p.m.

More specifically, in this example, in case of the communication reference information being the time of the current communication, the category "time" is accordingly determined as the screening category. Screening module 203 may then extract data of the category "time" from business promotion information of Haoledi KTV. For example, assuming the business object of Haoledi includes multiple business promotion pieces of information about coupons applicable for different time frames, including "Happy Morning", "Joyful Afternoon", "Lively Evening" and "Carnival Night". Data of the applicable time frames of these pieces of business promotion information, for example, 08: 00 a.m.-11: 00 a.m., 14: 00 p.m.-18: 00 p.m., 18:00 p.m.-22:00 p.m. and 22:00 p.m.-02:00 a.m. may be extracted. Since the time of the current communication is 15:00 p.m., which is beyond the time frame of the coupon "Happy Morning", i.e., 08: 00 a.m.-11: 00 a.m., coupons that remain available and selectable are "Joyful Afternoon" (14: 00 p.m.-18: 00 p.m.), "Lively Evening" (18:00 p.m.-22:00 p.m.) and "Carnival Night" (22:00 p.m.-02:00 a.m.). Therefore, the pieces of business promotion information of these available coupons are all selectable.

Alternatively, in addition to the data of the category "time", screening module 203 may further extract data of the category "location" from the business promotion information of the associated business object. For example, screening module 203 may further extract data of the category "location" from the pieces of business promotion information of the coupons "Joyful Afternoon" (14: 00p.m.-18: 00 p.m.), "Lively Evening" (18:00 p.m.-22:00 p.m.) and "Carnival Night" (22:00 p.m.-02:00 a.m.) and compare the locations corresponding to these pieces of business promotion information with the location of the current communication to obtain the distances of the locations corresponding to the pieces of the business promotion information from the location of the current communication. After that, these pieces of business promotion information may be screened according to a preset distance threshold.

Further, screening module 203 may also search business promotion information that has been previously downloaded on the mobile terminal based on the number of the mobile terminal. As such, when the business object corresponding to the communication information has no business promotion information, other associated business object(s) whose business promotion information has been even downloaded may be given a high priority. For example, if Haoledi KTV, whose telephone number is being dialed by the user, has no business promotion information and screening module 203 has detected out that the user has even downloaded previous coupon information of Melody KTV which is providing a coupon for the current time, then even if a coupon is also available from Cash Box KTV which is of the same type as Haoledi KTV and Melody KTV, screening module 203 will selected the coupon information of Melody KTV or giving the coupon information of Melody KTV a higher weight during a sort process.

Further, Step S33 may also include: selecting associated pieces of business promotion information based on the associated business object(s); and sorting the pieces of business promotion information based on the data of the screen category (ies). For example, the pieces of business promotion information may be sorted in an ascending order according to the time interval from the time when the current communication occurs, or in an order according to the distance from the location where the current communication occurs.

For example, screening module 203 locates five billiard halls and their discount information after the user dialed a telephone number of one of them. Based on GPS location information of these five billiard halls and that of the user, it is known that the five billiard halls are respectively 1 km, 2 km, 3 km, 4km and 5km away from the user. If a distance threshold predefined in the system is 3 km, then information of the last two will be discarded as their distances exceed the threshold, and the pieces of information of the remaining three will be sorted according to their distance in order from short to long.

Sorting the pieces of business promotion information may include: comparing each datum of the data of the screen category(ies) with the communication reference information to obtain a weight of one of the pieces of business promotion information corresponding to the specific datum; and calculating a total weight of each of the pieces of business promotion information and sorting the pieces of business promotion information according to their total weights. For example, weights of each of the pieces of business promotion information for different screening categories may be obtained and the total weight of the specific one of the pieces of business promotion information may be calculated as a mean of these weights. The pieces of business promotion information may be then sorted according to the results of the calculations.

Specifically, the weights of each of the pieces of business promotion information for different screening categories may be obtained based on one or more of: a total number of times that the specific piece of the business promotion information has been downloaded by all users in the database; a number of times the specific piece of the business promotion information has been previously downloaded on the mobile terminal; a recommendation factor of the specific piece of the business promotion information recorded in the database; an interval between a time indicated by the specific piece of the business promotion information and the current time; a distance between a location indicated by the specific piece of the business promotion information and the current location; and other download history information of the mobile terminal.

For example, in case that it is set as default that the sorting is based on total numbers of times that the respective pieces of the business promotion information have been downloaded by all the users in the database. Furthermore, the user may set a download-time threshold at the mobile terminal. For instance, pieces of the business promotion information that has been downloaded for a number of times exceeding a threshold value that is 20 is brought to a front position. Screening module 203 may further sort the business promotion information in order from high downloaded times by all the users to low, or only sort those the business promotion information with a downloaded times exceeding the threshold. In an embodiment, assuming there are telephone numbers of gasoline stations in the user's historical call logs, processing device 120may obtain their pieces of business promotion information related to the numbers according to the above-described process, for examples, gasoline station A, gasoline station B, gasoline station D, gasoline station I, gasoline station J, gasoline station K, gasoline station L, gasoline station W and gasoline station Z. Then processing device 120 may further sort and screen those business promotion information, such as gas coupon and so on. In another embodiment, processing device 120 may first follow the Steps of the above-described process to sort pieces of business promotion information of these gasoline stations according to their total number of times that they have been downloaded by all the users in the database and thereby screen them according to the user's personal download-time threshold, so as to obtain their pieces of business promotion information in the following order: gasoline station I, gasoline station J, gasoline station K and gasoline station L. However, if it is a fact that among these gasoline stations, gasoline station L is the one most visited by the user who has even downloaded previous business promotion information of the gasoline station for 25 times, then processing device 120 may rearrange the order in which the pieces of business promotion information of the gasoline stations are obtained to: gasoline station L, gasoline station I, gasoline station J and gasoline station K. Similarly, in case of the user having downloaded previous business promotion information of gasoline station L for 25 times and that of gasoline station K for 22 times, processing device 120 may accordingly rearrange the order in which the pieces of business promotion information of the gasoline stations are obtained to: gasoline station L, gasoline station K, gasoline station I and gasoline station J.

In another embodiment, the priority of the business promotion information may be adjusted according to attributes of the communication information. For example, when the communication information are obtained as the user is entering, the priority of the service item in the business promotion information can be increased, so that the service entry and service information menu applicable to perform associated operations are provided to the user when the user does not start a phone call, enabling that the user can obtain relevant information or perform relevant operations via these service item objects without dialing the entered telephone number, to greatly improve communication efficiency, considering that it is required to usually perform operations related to the business object when the user enters the telephone number on the dial interface.

Further, screening module 203 may collect personalized data of the user based on the number of the mobile terminal and prescribe different weighing systems for different users based on an analysis of the collect personalized data. Specifically, the analysis may be performed on, for example, behavior history, preferences, personal information and other data of a user to produce a dedicated weighing scheme for the user. For example, in an analysis of behavior history of a user, if extracted location data from the user's historical downloads of coupons indicate that most of the locations are in east but not west of a city, then information of coupons from business entities in east of the city will be delivered to the user with a higher priority. For another example, in an analysis of preferences of a user, if a statistical result of the user's historical downloads shows that, in previously downloaded restaurant coupons, the number of Japanese food coupons is larger than that of Korean food coupons, then even through Japanese and Korean food restaurants are usually categorized in the same type, information of Japanese food coupons will be transmitted to the user more preferably. For yet another example, an analysis of behavior history of a user may substantially ascertain the gender, age group and other personal data of the user and each piece of the business promotion information compatible with these personal data may be given a high priority during when to sort the business promotion information.

In Step S4, the selected or sorted pieces of the business promotion information are fed back to the mobile terminal by a feeding module 204. In one embodiment, feeding module 204 directly feeds the selected or sorted pieces of the business promotion information in the form of text or text-to-speech items to the mobile terminal in a predefined order. In another embodiment, feeding module 204 matches a feeding mode to the attribute of the communication information and then feeds the selected or sorted pieces of the business promotion information to the mobile terminal in the feeding mode.

Specifically, in case of the communication information obtained during an input, dialing or conversation process, feeding module 204 displays at least one of the pieces of the business promotion information in a popup box on an interface of the mobile terminal. As shown in FIG. 3, during the communication between the user and the business object " 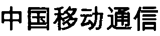 ", feeding module 204 displays the business promotion information in a popup box directly on the interface of the mobile terminal and the user may click the popup box to view the business promotion information or trigger a corresponding operation. Alternatively, in case of the communication information obtained from a call log, as shown in FIG.5, feeding module 204 provides a corresponding item of the call log with a mark, referring to the marks " 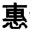 " (with a discount meaning in Chinese) on the right side of the item " 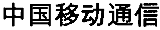 " and the item " 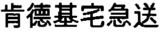 ", indicating the availableness of at least one of the pieces of the business promotion information for the corresponding item of the call log and, upon the mark being selected, displays the at least one of the pieces of the business promotion information. For instance, when the mark " 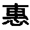 " of " 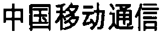 " in FIG.5 is selected, a corresponding business promotion information of the selected business object will be displayed in a form of popup box, pull-down menu or lists to the user, or in a detail interface as shown in FIG. 4. Alternatively, in case of the communication information obtained from a call log, feeding module 204 displays the pieces of the business promotion information in a list located at a place of a corresponding item of the call log. Alternatively, in case of the communication information obtained from details of a contact of the associated at least one of the business objects, feeding module 204 displays at least one of the pieces of the business promotion information in a menu; referring to FIG.4, pieces of the business promotion information are displayed in a list or with a picture in the detail interface for the user to take a view or an operation. Alternatively, in case of the communication information obtained from the current input of the user, referring to FIG.10, feeding module 204 displays at least one of the pieces of the business promotion information in a menu or a list.

Referring to FIG. 3, at a time when the user is being involved in a conversation process, in order to avoid creating too may focuses on the conversation interface and in consideration that it is not a proper moment for the user to read much information, only one of the piece of the business promotion information, for example, the one with the highest weight, may be presented in a popup box on the conversation interface.

Referring to FIG. 4, as the user is usually more willing to read more information when viewing detailed information of a contact and the interface for displaying the detailed information usually has a large area, more than one of the piece of the business promotion information may be generally displayed in a menu on the interface.

Referring to FIG. 5, a mark may be provided beside an item in a call log to indicate the availableness of one(s) of the pieces of the business promotion information of the associated business entity of the corresponding telephone number, and with additional reference to FIG. 4, a tap on the item by the user will navigate to a contact detail interface which allows the user to know more pieces of the business promotion information or the details of a certain one of the pieces of the business promotion information.

Further, the pieces of the business promotion information may be also fed back in the form of a text-to-speech, notification sound or other multimedia item, so that more diversified feeding modes are achievable and the fed pieces of the business promotion information may be applicable to more population groups.

In other embodiments, Step S4 may further include: feedback said business object synchronously. Wherein, said business object may be displayed centrally, such as all the business objects may be displayed prior to the business promotion information; or said business object may be displayed corresponding to said business promotion information.

In other embodiments, Step S4 may further include: feedback the contacts matched with the communication information. Wherein, the matched contacts may be displayed prior to the business objects or the business promotion information.

In other embodiments, when at least two of the business objects, contact persons and pieces of business promotion information appear at the same time, Step S4 may further include: display them in a specific display mean. For example, a split line is set between the displayed business object or contact person or business promotion information, to make a divided representation. Or display the business object, contact person or business promotion information in different fonts, colors or formats.

In other embodiments, one aspect of the present disclosure may further include: when the user selects one of the pieces of the business promotion information, dialing a telephone number corresponding thereto.

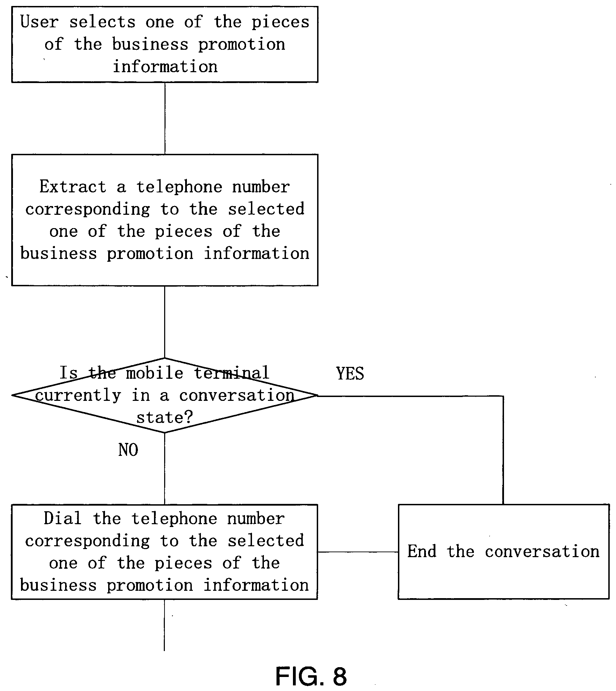

Specifically, as shown in FIG. 8, upon the user selecting one of the pieces of the business promotion information, processing device 120 may extract a telephone number corresponding to the selected one of the pieces of the business promotion information and determine whether the mobile terminal is currently in a conversation state. If no, the mobile terminal may be caused to dial the telephone number corresponding to the selected one of the pieces of the business promotion information. Otherwise, the extracted telephone number may be compared with a currently connected telephone number. If the two are the same, no action will be taken. Otherwise, the conversation may be ended and the mobile terminal may be caused to dial the extracted telephone number instead.

In other embodiments, one aspect of the present disclosure may further include: when a selection of business promotion information is detected, a corresponding operation to the selected business promotion information is further performed, for instance, to open a link so as to display a corresponding interface.

In other embodiments, one aspect of the present disclosure may further include: when a selection of business promotion information is detected, dial the telephone number of the business object or visit its website or open the interactive interface or perform other commands.

Referring to FIG. 12, another embodiment may include:

Step S11, obtain a communication information, and the communication information relates to at least one of the business object or the business promotion information in the database. In some embodiments, Step S11 may further detect a user's input or detect an attribute thereof from the mobile terminal, to obtain corresponding communication information. For example, detecting the user's input to obtain a character string entered by the user and further obtaining corresponding number or letter string by analyzing the character string, or obtaining the telephone which is being dialed via the detecting interface functions TelephonyManager or PhoneStateListener. In other embodiments, Step S11 may also include obtaining the keyboard layout when the user enters, such as a full keyboard or a dial keyboard while inputting.

In Step S12, search in the business object (s) or business promotion information according to the communication information, to obtain the business object associated with the communication information or associated business promotion information. Wherein, the business object associated with the communication information may include the business object including a corresponding category the data of which is as the same as the communication information, or the business object which belongs to the same category with the business objects aforementioned.

In some embodiments, data of a relevant category of the communication information is extracted from the business object (s) or business promotion information and compared with the communication information. The business object (s) or business promotion information associated with the above communication information is obtained according to a compared result.

In some embodiments, search in data of categories of the business objects or business promotion information according to the communication information. For instance, compare each datum of each category with the communication information and obtain a corresponding compared result.

When a business object is obtained in Step S12, further obtain associated business promotion information according to Step S13.

In another embodiment, obtain corresponding business promotion information according to a classification of the associated business object. For example, referring to FIG. 11, after obtaining the associated business object "Hilton", the business promotion information apparatus 120 further obtains the categories of the business object, which are "Hotel", "Trip", and "Travel". The business promotion information apparatus 120 directly obtains associated business promotion information according to the categories, such as the service entry "Booking", service entry "Calling a cab", service entry "Renting a car", service entry "Driving service", service entry "Checking flight", service information menu "Nearby parking lot" and service information menu "Train schedule", etc.

In another embodiment, obtain associated business promotion information according to data of other categories of the associated business object. For example, when the communication information is obtained, match the communication information to the telephone number of the business object, so as to obtain the associated business object (s) and further to obtain corresponding business promotion information according these associated business objects. Next, search according to the telephone number of the business object, to obtain associated business promotion information. Wherein, data of the associated sub-category may include the telephone number of the business object.

While the business promotion information is being obtained according to Step S12 or Step S13, screen, filter or sort the business promotion information according to the communication reference information through Step S14. For example, when the current communication location is obtained to be the airport, the business promotion information apparatus 120 deletes the service information menu "train schedule" or decreases the priority of the service information menu "travel schedule". For another example, when the service entry " Calling a cab" is detected to be used before, the business promotion information apparatus 120 deletes the service entry "Driving service" or service information menu "Nearby parking Iot", or decreases the priority of these business promotion information.

Further, Step S14 may include sorting of the business promotion information. For example, sort each piece of business promotion information according to the communication reference information. In one embodiment, compare communication reference information with the screened data of the business promotion information and adjust the priority of the business promotion information according to compared results. For example, calculate a corresponding weight according to the compared result. In some embodiments, adjust the priority of the business promotion information based on personalized data. For instance, obtain different weight systems of different users according to personalized data of the user, based on which, the priority of the said business promotion information may be adjusted by calculating the weights.

In some embodiments, the priority of the business promotion information may be adjusted according to attributes of the communication information. For example, when the communication information is obtained as the user enters, feedback the service item object of the business promotion information in advance, so as to reduce call frequencies, decrease communication costs and improve communication efficiencies.

In Step S15, feedback the selected or sorted business promotion information to the mobile terminal.

In some embodiments, Step S15 may include synchronous feedback of associated business objects to the mobile terminal. In some embodiment, Step S15 further includes synchronous feedback of contact persons matched with the communication information, to the mobile terminal.

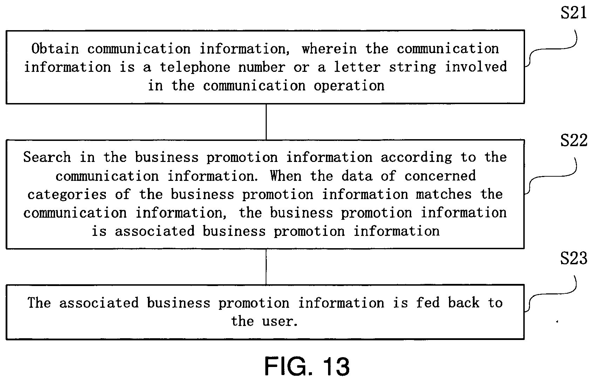

Referring to FIG. 13, another embodiment may include:

In Step S21, obtain communication information, wherein the communication information is a telephone number or a letter string involved in the communication operation.

In some embodiments, the communication information is a telephone number, such as part of or a whole telephone number which the user is currently inputting, or a telephone number in the call log, or a certain telephone number on process, or a contact number that the user is viewing. Specifically, the above communication information may be obtained by the business promotion information apparatus 120 via detecting the user's input, or the call process parameters of the mobile terminal 110.

In Step S22, search in the business promotion information according to the communication information. When the data of concerned categories of the business promotion information matches the communication information, the business promotion information is associated business promotion information.

In some embodiments, search if the communication information is included in the data of concerned categories of the business promotion information. When the communication information is included, the business promotion information is associated.

In some embodiments, Step S22 further includes: screening and filtering the associated business promotion information according to the communication reference information of the mobile terminal. In some embodiments, the data of a category of the business promotion information which is as the same as or similar with the communication reference information, is extracted from the business promotion information. Then, a difference of value, between the extracted data and communication reference information, is calculated, and the difference is compared with the set threshold to realize screening and filtering. Alternatively, a weight of corresponding business promotion information is obtained according to comparison results between extracted data and communication reference data and calculated for screening and filtering.

In Step S23, the associated business promotion information is fed back to the user.

Searching and obtaining of the association business objects or associated business promotion information are automatically completed by the business promotion information apparatus 120 after the communication information is obtained each time, or triggered according to the operations set by the user.

For example, in some embodiments, when the user enters the telephone number, the business promotion information apparatus 120 detects the text string set by the user to obtain the communication information. When the user clicks the dial key or the call process initiates, the business promotion information apparatus 120 is triggered to search or obtain associated business object or associated business promotion information. For another example, when the user hangs up the call, the hang-up or the end of the call process will trigger searching or obtaining associated business objects or associated business promotion information.

In some embodiments, when the user enters every character during the user enters the telephone number, the business promotion information apparatus 120 updates all entered characters, and takes these updated characters as the latest communication information to search or obtain associated business objects or business promotion information. In other embodiments, the business promotion information apparatus 120 will takes the previously entered character string as the communication information, based on which the business object or business promotion information is searched or obtained. When there exist newly-entered characters, filter according to the current new characters, based on the previous results researched or obtained, to obtain the associated business object or business promotion information related to the current input.

Subsequently, after the associated business objects or business promotion information are obtained, feedback these associated business objects or business promotion information or trigger according to operations set by the user. For example, when the user makes a call, the business promotion information apparatus 120 searches and obtains associated business objects or business promotion information according to the telephone number in the call. When detecting that the user performs hang-up or other set operations, obtained associated business objects or business promotion information are fed back to the user. For another example, when detecting that input of the telephone number is completed, and there are clicks of the dial pad, the business promotion information apparatus 120 priorities feeding back obtained associated business objects or business promotion information to the user before initiating the call process.

As indicated above, compared to the prior art solutions, the present disclosure may take the full advantage of a telephone number of a business entity that is being or was dialed or answered by the user to deliver business promotion information associated with the telephone number with high pertinence, thus achieving increased advertising accuracy of the business promotion information. In addition, from the view of the user, a great improvement in search and download efficiency is achievable without an increase in operational complexity

Further, the present disclosure fully takes into account various scenarios of the user conducting a conversation on the mobile terminal, by providing different modes each for feeding the business promotion information back in a manner and number compatible with a corresponding one of the scenarios. This allows the user to directly view business promotion information of a business entity while communicating therewith, thereby achieving increased communication efficiency.

While particular embodiments of the present disclosure have been described herein, it should be understood that the invention is not limited to these particular embodiments. Those skilled in the art may make various variations and modifications without departing from the scope of the appended claims, which, however, do not affect the essence of the present disclosure.

## Claims

1. A method for transmitting a business promotion information to a mobile terminal, wherein comprising:
obtaining communication information from the mobile terminal, the communication information being associated with at least one of business objects in a database;
extracting and obtaining a business object associated with the communication information from a database including at least one business object, wherein, said associated business object including a business object comprising said communication information, or a business object comprising a category same with the business object comprising said communication information;
obtaining an associated business promotion information, according to said associated business object and a communication reference information;
feeding said associated business promotion information back to the mobile terminal.

2. The method of claim 1, wherein extracting a business object associated with the communication information from a database including at least one business object, further comprising:
screening in the business object according to said communication information,
extracting data of the same or a similar category as that of said communication information from the business object, and
obtaining the business object comprising said communication information by comparing each datum of the extracted data with the communication information.

3. The method of claim 1 or 2, wherein obtaining associated business promotion information according to associated business objects and communication reference information comprising one or more of:
extracting data of at least one screening category from the business promotion information of associated business objects, comparing data of said screening category and obtaining associated business promotion information according to said comparison result; or
obtaining associated business promotion information according to the category which said associated business objects belongs to or a telephone number of said associated business object, wherein, data of a certain category of said associated business promotion information includes the category or the telephone number of said associated business object.

4. The method of any of claims 1-3, wherein the communication reference information includes one or more of:
a time when the communication information is obtained;
a location where the mobile terminal is located when the communication information is obtained; and
a number of the mobile terminal.

5. The method of claim 4, wherein obtaining the associated business promotion information according to the comparison result between the extracted data of the screening category and the communication reference information includes:
comparing an associated time indicated by a business promotion information with the communication reference information, and when the difference between them is within a predetermined time threshold, said business promotion information is obtained as said associated business promotion information;
comparing an associated location indicated by a business promotion information with the communication reference information, and when the difference between them is within a predetermined distance threshold, said business promotion information is obtained as said associated business promotion information; and
when a number of a mobile terminal indicated by a business promotion information, on which the business promotion information has ever been downloaded, is equal to the communication reference information, said business promotion information is obtained as said associated business promotion information.

6. The method of claim 3, wherein obtaining associated business promotion information according to a comparison result between the data of the screening category and communication reference information, comprising:
comparing the data of the screening category and communication reference information and obtaining a weight of associated business promotion information according to the comparison result;
calculating a total weight related to every piece of the business promotion information and sorting the business promotion information based on the total weight.

7. The method of claim 7, wherein calculating the total weight relating to every business promotion information, comprising: calculating the total weight of every piece of the business promotion information by a weighted average mean, according to the weight relating to a screening category of the business promotion information.

8. The method of claim 7, wherein obtaining a weight of associated business promotion information according to the comparison results comprising one or more of:
obtaining a weight of the business promotion information based on a total number of times that the specific business promotion information has been downloaded, or
obtaining a weight of the business promotion information based on a number of times the specific business promotion information has been previously downloaded on the mobile terminal, or
obtaining a weight of the business promotion information based on a recommendation factor of the specific business promotion information, or
obtaining a weight of the business promotion information based on an interval between a time indicated by the specific business promotion information and the current time, or
obtaining a weight of the business promotion information based on a distance between a location indicated by the specific business promotion information and the current location; or
obtaining a weight of the business promotion information based on other download history.

9. The method of any of claims 1-3, wherein the communication information includes one or more of:
a telephone number dialed or answered on the mobile terminal;
a telephone number input in or selected on the mobile terminal;
a telephone number present in a contact list on the mobile terminal;
a name of a business entity input in the mobile terminal.

10. The method of claim 3, wherein obtaining said communication information from the mobile terminal, comprising: automatically obtaining communication information from the call log.

11. The method of any of claims 1-3, further comprising: said obtaining the business objects associated with said communication information or said obtaining associated business promotion information or said feeding associated business promotion information back to said terminal, is trigger by a preset operation.

12. The method of any of claims 1-3, wherein said preset operation including:
an operation of dialing or an initialization of a communication process;
an operation of hang-up or a termination of a communication process.

13. The method of any of claims 1-3, wherein feeding said business prompting information back to the terminal comprising: based on the attribute of said communication information, feeding the selected or screening business prompting information back to the terminal according to a matched feeding model.

14. The method of claim 1, wherein said business promotion information is a service object, wherein, said service object includes a web link or a function call or one function module entry.

15. The method of any of claims 1-3, wherein feeding back business promotion information to the mobile terminal further includes feeding back said associated business object and/or contact persons matched with said communication information.

16. The method of claim 15, wherein feeding back associated business object and/or contact persons matched with said communication information: displaying associated business object, business promotion information or contact person in a specific display mean or order.

17. The method of claim 15, wherein further includes: making a phone call to said business object, or visiting the website of said business object, or opening an interactive interface, via selecting said associated business promotion information or associated business object.

18. The method of claim 1, wherein further includes: promoting a user to edit said communication information when there is not an existing business object associated with said communication information.

19. The method of claim 18, wherein promoting the user to edit said communication information further includes: establishing a business object associated with said communication information, or revising an existing business object so as to get it associated with said communication information, according to the edition of said communication information.

20. A method for delivering a business promotion information to a mobile terminal, wherein comprising:
obtaining communication information from the mobile terminal;
searching in at least one piece of the business promotion information, and obtaining a business promotion information associated with the communication information, wherein, the associated business promotion information includes the business promotion information including said communication information;
feeding back the said business promotion information to said mobile terminal.

21. The method of claim 20, wherein obtaining associated business promotion information further includes:
obtaining a communication reference information;
screening, filtering or sorting said business promotion information according to said communication reference information.

22. The method of claim 20, wherein screening, filtering or sorting the business promotion information according to communication reference information includes:
extracting data of a screening category from said business promotion information according to at least one screening category,
comparing said data of the screening category and the said communication reference information, and
screening, filtering or sorting said business promotion information according to comparison result.

23. The method of claim 22, wherein said obtaining associated business promotion information according to the comparison result between data of the screening category and communication reference information, includes:
comparing an associated time indicated by a business promotion information with the communication reference information, and when the difference between them is within a predetermined time threshold, said business promotion information is obtained as said associated business promotion information;
comparing an associated location indicated by a business promotion information with the communication reference information, and when the difference between them is within a predetermined distance threshold, said business promotion information is obtained as said associated business promotion information; and
when a number of a mobile terminal indicated by a business promotion information, on which the business promotion information has ever been downloaded, is equal to the communication reference information, said business promotion information is obtained as said associated business promotion.

24. The method of claim 22, wherein said obtaining associated business promotion information according to the comparison result between data of the screening category and communication reference information, includes:
comparing the data of the screening category and communication reference information and obtaining a weight of associated business promotion information according to the comparison result;
calculating a total weight related to every piece of the business promotion information and sorting the business promotion information based on the total weight.

25. The method of claim 24, wherein calculating the total weight relating to every business promotion information, comprising: calculating the total weight of every piece of the business promotion information by a weighted average mean, according to the weight relating to a screening category of the business promotion information.

26. The method of claim 24, wherein obtaining a weight of associated business promotion information according to the comparison results comprising one or more of:
obtaining a weight of the business promotion information based on a total number of times that the specific business promotion information has been downloaded, or
obtaining a weight of the business promotion information based on a number of times the specific business promotion information has been previously downloaded on the mobile terminal, or
obtaining a weight of the business promotion information based on a recommendation factor of the specific business promotion information, or
obtaining a weight of the business promotion information based on an interval between a time indicated by the specific business promotion information and the current time, or
obtaining a weight of the business promotion information based on a distance between a location indicated by the specific business promotion information and the current location; or
obtaining a weight of the business promotion information based on other download history.

27. The method of claim 20, wherein said business promotion information is a service object, wherein, said service object includes a web link or a function call or one function module entry.

28. The method of claim 20, wherein said communication reference information includes one or more of:
a time when the communication information is obtained;
a location where the mobile terminal is located when the communication information is obtained; and
a number of the mobile terminal.

29. The method of claim 20, wherein said communication information includes one or more of:
a telephone number dialed or answered on the mobile terminal;
a telephone number input in or selected on the mobile terminal;
a telephone number present in a contact list on the mobile terminal;
a name of a business entity input in the mobile terminal.

30. The method of claim 20, wherein feeding back the business promotion information to the mobile terminal further includes: feeding back contact person matched with said communication information.

31. The method of claim 30, wherein feeding back contact persons matched with communication information includes: displaying associated business objects, business promotion information or contact persons in a specific display mean or order.

32. A business promotion information dealing apparatus, comprising:
a recording module, adapted to obtain communication information and communication reference information from a mobile terminal, the communication information including a telephone or a text string in a communication process;
a search module, adapted to extract a business object or business promotion information associated with the communication information according to said communication information, wherein said associated business object or associated business promotion information comprising said communication information;
a screening module, adapted to sort, filter or screen said business promotion information based on said communication reference information; and
a feeding module, adapted to feed the business promotion information back to the mobile terminal.

33. A system for transmitting business promotion information to a mobile terminal, comprising:
a mobile terminal, adapted to provide communication information;
a database, adapted to store business objects and business promotion information; and a business promotion information dealing apparatus, adapted to search in the database according to the communication information from the mobile terminal, obtain business promotion information associated with the communication information, and feed the business promotion information back to the mobile terminal; wherein, said business promotion information including the communication information.
